# EUROPEAN PATENT APPLICATION

(11) **EP 4 560 891 A1**
(43) Date of publication of application: **28.05.2025**
(21) Application number: 24212012.9
(22) Date of filing: 11.11.2024
(51) Int. Cl.: H02K 3/50, H02K 9/19, H02K 1/20, H02K 3/24

(54) **MOTOR**

(30) Priority: 22.11.2023 JP 2023198473
(71) Applicant: TOYOTA JIDOSHA KABUSHIKI KAISHA, Aichi-ken, 471-8571 (JP)
(72) Inventor: WATANABE, Kohei, Toyota-shi, 471-8571 (JP); NAGAI, Shingo, Toyota-shi, 471-8571 (JP); DEGUCHI, Junichi, Toyota-shi, 471-8571 (JP); YOSHIOKA, Kentaro, Toyota-shi, 471-8571 (JP); TAKAO, Ren, Toyota-shi, 471-8571 (JP); KAJIMOTO, Shogo, Toyota-shi, 471-8571 (JP)
(74) Representative: TBK

(57) **Abstract**

The motor (2; 102; 202) includes a stator core (8), a coil (14) wound around the stator core (8), a neutral bus bar (30) connected to the coil (14), and a bus bar holder (40; 140; 240) that holds the neutral bus bar (30). The bus bar holder (40; 140; 240) includes a coolant flow path capable of receiving a coolant for the motor (2; 102; 202) and also supplying the coolant to a coil end (14a) exposed from the stator core (8).

## Description

### BACKGROUND OF THE INVENTION

### 1. Field of the Invention

The technology disclosed in the present specification relates to a motor.

### 2. Description of Related Art

A motor includes a stator in which coils of three phases are wound around a stator core, and a rotor. At each end of the stator core in an axial direction, a coil end is formed by connecting ends of coils extending outward from the stator core in the axial direction to each other, by welding. A neutral bus bar is connected to a lead-out coil extending from a portion of such a coil end, by welding or the like (Japanese Unexamined Patent Application Publication No. 2019-110676 (JP 2019-110676 A)).

### SUMMARY OF THE INVENTION

There are cases in which the neutral bus bar occupies a certain range of space on an outer peripheral side of the stator core. When attempting to supply coolant to cool the coil end, the neutral bus bar can make it difficult for the coolant to reach the coil ends.

The present specification provides technology for effectively cooling a coil end in a motor, while being provided with a neutral bus bar.

An aspect of the present disclosure is a motor. The motor includes a stator core, a coil that is wound around the stator core, a neutral bus bar that is connected to the coil, and a bus bar holder that holds the neutral bus bar. The bus bar holder includes a coolant flow path capable of receiving coolant from the motor and also supplying the coolant toward a coil end exposed from the stator core.

In the motor according to the aspect of the present disclosure, the coolant flow path may include a coolant guide that is open and that guides the coolant toward the coil end. According to this form, the coolant can be supplied to the coil with a simple configuration.

In the motor according to the aspect of the present disclosure, the coolant flow path may include an internal coolant flow channel that passes through the bus bar holder and also includes an opening that discharges the coolant toward the coil end. This allows the coolant to be supplied to the coil more reliably and without waste.

The motor according to the aspect of the present disclosure may include a coolant supply channel configured to supply the coolant to the coolant flow path. According to this form, the coolant is supplied to the coolant guide through the coolant supply channel, and accordingly the coolant can be supplied to the coil more efficiently.

In the motor according to the aspect of the present disclosure, the coolant flow path may include a coolant guide that is open and that guides the coolant toward the coil end. The coolant supply channel may be configured to communicate with the coolant guide such that the coolant flows through the coolant guide, or to discharge the coolant into the coolant guide. Thus, degree of freedom in layout and configuration of the bus bar holder and the coolant supply channel can be increased.

In the motor according to the aspect of the present disclosure, the coolant supply channel may be disposed spaced apart from the bus bar holder. The coolant guide may be configured to receive the coolant discharged from the coolant supply channel. Thus, the degree of freedom in the layout and the configuration of the bus bar holder and the coolant supply channel can be increased.

In the motor according to the aspect of the present disclosure, the coolant flow path may include an internal coolant flow channel that passes through the bus bar holder and that also includes an opening that discharges the coolant toward the coil end. The coolant supply channel may communicate with the internal coolant flow channel such that the coolant flows through the internal coolant flow channel, or may discharge the coolant into a coolant intake hole of the internal coolant flow channel. Thus, the coolant can be reliably supplied to the coil end via the internal coolant flow channel.

In the motor according to the aspect of the present disclosure, the bus bar holder may include a skirt portion extending toward the coil end to supply the coolant that passed through the coolant flow path to the coil end. According to this form, the coolant can be reliably supplied to the coil end.

In the motor according to the aspect of the present disclosure, the bus bar holder may be configured to supply the coolant to the coil end over a range of at least a quarter of a circumference of the stator core. This allows the coil end to be cooled effectively.

In the motor according to the aspect of the present disclosure, the coolant supply channel is disposed on an outer periphery of the stator core. This conveniently allows the coolant to be efficiently supplied to the bus bar holder.

In the motor according to the aspect of the present disclosure, the coolant supply channel passes through inside of the stator core. This allows the stator core to be cooled and also allows the coil to be cooled at the same time, and also enables the structure for cooling to be made more compact.

According to the motor described above, the coil is effectively cooled since the coolant received by the bus bar holder is supplied to the coil.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a plan view illustrating a stator, a neutral bus bar, and a cooling flow channel in a motor according to a first embodiment;
FIG. 2 is diagram illustrating a cross-sectional view taken along line II-II in the plan view of FIG. 1;
FIG. 3A illustrates an example of a skirt portion provided on a bus bar holder;
FIG. 3B illustrates a coolant guide that has coolant intake holes;
FIG. 4 is a plan view illustrating a stator, a neutral bus bar, and a cooling flow channel in a motor according to a second embodiment;
FIG. 5 is diagram illustrating a cross-sectional view taken along line V-V in the plan view of FIG. 4;
FIG. 6 illustrates an internal coolant flow channel that has a coolant intake hole; and
FIG. 7 is a diagram illustrating a cross-sectional structure of a stator, a neutral bus bar, and a cooling flow channel in a motor according to a third embodiment.

### DETAILED DESCRIPTION OF EMBODIMENTS

A motor disclosed in the present specification will be described below with reference to the drawings as appropriate. In the present specification, the motor is not limited in particular, but may be, for example, a traction motor installed in an electrified vehicle, or may be part of an e-Axle or the like. The electrified vehicle may be a battery electric vehicle (BEV), a hybrid electric vehicle (HEV), a plug-in hybrid electric vehicle (PHEV), a fuel cell electric vehicle (FCEV), or the like. An upper side of the motor in a gravitational direction when installed a vehicle is referred to as the "upper side in vertical direction," and a lower side in the gravitational direction is referred to as the "lower side in vertical direction." Also, in the present specification, simply referring to "axial direction" means an axial direction of a stator that the motor is equipped with, simply referring to "peripheral direction" means a peripheral direction of the stator, and simply referring to "radial direction" means a radial direction of the stator.

### First Embodiment

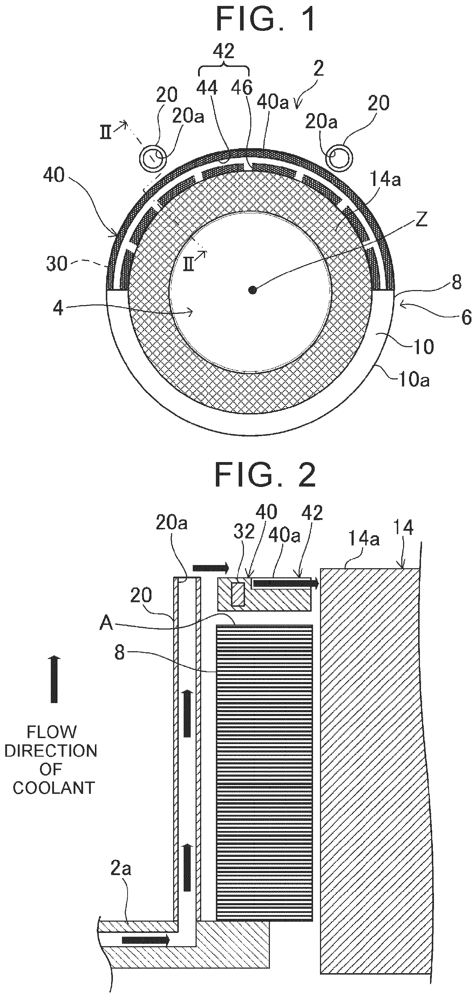

A first embodiment relates to a motor 2 in which a bus bar holder 40 is provided with a coolant guide 42 that is open and that serves as a coolant flow path, as exemplified in FIGS. 1 and 2. FIG. 1 is a plan view illustrating a stator 6, coolant supply channels 20, a neutral bus bar 30, and the bus bar holder 40, in the motor 2 according to the first embodiment, and FIG. 2 is a cross-sectional view taken along line II-II in the plan view of FIG. 1.

The motor 2 includes a rotor 4, the stator 6, the coolant supply channels 20, the neutral bus bar (hereinafter also simply referred to as "bus bar") 30, and the bus bar holder (hereinafter also simply referred to as "holder") 40. The stator 6 includes a stator core 8 and a stator coil (hereinafter, also simply referred to as "coil") 14. The stator core 8 is a substantially annular member with respect to a central axis Z of the motor 2, and is made up of stacked steel plates and so forth, for example. The rotor 4 is disposed in a middle hole portion of the stator core 8. The stator core 8 has a plurality of teeth (omitted from illustration) protruding in the radial direction from an inner peripheral face of a back yoke 10 that has an annular shape with a predetermined width, and slots (omitted from illustration) formed between the teeth.

The coil 14 is configured with a conducting wire is wound in slots of the teeth of the stator core 8 that are spaced apart in the peripheral direction. Note that in FIG. 1, a coil end 14a is illustrated in a simplified manner. In FIG. 2, the coil 14 and the coil end 14a are illustrated in a simplified manner. Connection forms and so forth of the conducting wire for forming the coil 14 are not limited in particular. The coil 14 is made up of a coil group for three phases (omitted from illustration), and at an end portion A, which is an end portion of the stator core 8 on one side in the axial direction, coils 14 of the same phase wound spaced apart in the peripheral direction are welded to form coil ends 14a, which are the ends of each phase.

The coolant supply channels 20 are conduits through which coolant flows and also from which the coolant is discharged in the vicinity of the end portion A. The coolant supply channels 20 are situated at the upper side in the vertical direction, and the coolant flows from the upper side to the lower side in the vertical direction, whereby the entire coil can be cooled. The coolant supply channels 20 extend in the axial direction at two predetermined positions on an outer periphery of the stator core 8. The coolant supply channels 20 are disposed on the outer peripheral side of the stator core 8 relative to the holder 40, and are spaced away from the holder 40. Also, the coolant supply channels 20 are disposed at two positions that roughly divide an extending direction of the holder 40 into three parts.

The coolant supply channels 20 are supplied with the coolant circulating within the motor 2, a casing 2a that houses the motor 2, or the like. In the present embodiment, the coolant is supplied to the coolant supply channels 20 through the casing 2a and flows toward the end portion A. The coolant supply channels 20 reach a protruding position of the coil end 14a protruding from the stator core 8 at the one end portion A of the stator core 8 or the vicinity thereof. The coolant supply channels 20 have discharge ports 20a that are open at one end portion thereof. Note that in the present embodiment, the discharge ports 20a open in the axial direction, but may open in the radial direction. The coolant supply channels 20 are configured to be able to discharge the coolant from the discharge ports 20a toward the holder 40 disposed away therefrom. Note that the coolant is not limited in particular, and any oil-based liquid that can be used to cool a motor or the like can be used as appropriate.

The bus bar 30 is disposed extending in an arc-like shape in the peripheral direction of the stator core 8. The bus bar 30 has a plurality of connection terminals (omitted from illustration) on a base portion 32 that is arc-shaped, which are spaced apart at predetermined intervals in an extending direction thereof and are connected to end portions of each phase of the stator coils. For example, the base portion 32 of the bus bar 30 is disposed so as to overlap an outer peripheral edge 10a of the back yoke 10, or is disposed in close proximity to the outer peripheral edge 10a on the outer peripheral side thereof. Also, the bus bar 30 extends over a range equivalent to approximately half of the entire circumference of the stator core 8 in the peripheral direction thereof. Also, the bus bar 30 is disposed extending in the axial direction such that the base portion 32 thereof is spaced apart from the end portion A of the stator core 8 to an extent of reaching the end portion of the coil end 14a or a vicinity thereof.

The holder 40 is a molded body made of resin or the like that covers the base portion 32 of the bus bar 30. The holder 40 covers and holds the base portion 32, provided with connection terminals exposed therefrom. The holder 40 is formed by, for example, injection molding or insert molding of a resin with respect the base portion 32. For example, in plan view, the holder 40 extends over a range equivalent to approximately half of the entire circumference of the stator core 8 in the peripheral direction, similar to the bus bar 30, and also is disposed so as to extend away from the end portion A of the stator core 8 in the axial direction, to an extent of reaching the end portion of the coil end 14a or the vicinity thereof. Also, the holder 40 has a rectangular cross-section.

A face 40a of the holder 40 facing outward in the axial direction is formed with the coolant guide 42 that is recessed and open, and serves as a coolant flow path in a predetermined pattern. The coolant guide 42 has a channel shape that is open, and is formed so as to be able to receive the coolant pouring down from the coolant supply channels 20 onto the coolant guide 42. That is to say, the coolant guide 42 is situated vertically below the discharge ports 20a. Also, the coolant guide 42 is formed so as to be able to supply the received coolant towards the coil 14, particularly the coil end 14a. As illustrated in FIG. 1, the coolant guide 42 includes, for example, a guide 44 that is arc-shaped and elongated, and aligned along the extending direction of the base portion 32, and a plurality of guides 46 branching out in the radial direction from an inner periphery of the guide 44.

Next, cooling of the coil end 14a in the motor 2 will be described. When the coolant flowing through the motor 2 and the casing 2a of the motor 2 is supplied to the coolant supply channel 20, the coolant flows toward the end portion A and the coolant is discharged from the discharge ports 20a of the coolant supply channels 20 toward the holder 40. The coolant that is discharged pours onto the coolant guide 42 of the holder 40. The coolant that reaches the coolant guide 42 flows over the guides 44 and 46, and is supplied from the base portion 32 of the holder 40 toward the coil end 14a. The base portion 32 has an arc-like shape that follows along a predetermined range of the outer peripheral edge of the stator core 8, and the coolant is supplied over a corresponding range of the coil end 14a.

In this manner, the coolant is supplied to the coil end 14a via the coolant guide 42, which serves as a coolant flow path provided in the holder 40, and accordingly the coil end 14a is cooled. Thus, the coolant is not obstructed by the holder 40, but rather is guided by the holder 40 and supplied to the coil end 14a, thereby effectively cooling the coil end 14a. The holder 40 is also cooled.

In the present embodiment, the holder 40 is provided over half the range along the peripheral direction of the stator core 8, and the coolant can be supplied over the same range, such that the coil end 14a can be effectively cooled. Note that the coil end 14a can be sufficiently cooled even when the area is only about, for example, one-fourth or one-third of the range of the stator core 8 in the peripheral direction.

In the present embodiment, the coolant supply channel 20 and the holder 40 can be configured separately and installed separately, which increases the degree of freedom in design thereof. Note that the coolant supply channel 20 does not necessarily have to be provided. In the vicinity of the motor 2, the coolant flies within the casing 2a of the motor 2, and the coolant guide 42 of the holder 40 can suitably receive such coolant and perform supplying thereof to the coil end 14a.

In the present embodiment, the holder 40 includes the guides 44 and 46 as the coolant guide 42 serving as a coolant flow path, such that the coolant can be supplied to the coil end 14a throughout the extending direction of the holder 40. Note that the formation pattern of the coolant guide 42 is not limited in particular, and may be set as appropriate.

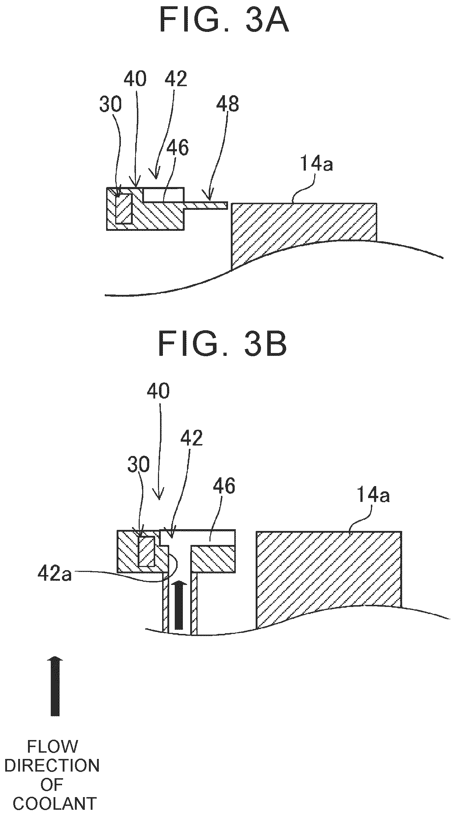

Further, as illustrated in FIG. 3A, the holder 40 can include one or multiple skirt portions 48 extending from the holder 40 toward the coil end 14a. The skirt portion 48 is formed in accordance with the shape of the holder 40 and the positional relationship between the holder 40 and the coil end 14a. As illustrated in FIG. 3A, the skirt portion 48 extends a predetermined distance from tan inner periphery of the holder 40 that is arc-shaped, in the radial direction toward the coil end 14a. The length and so forth of the skirt portion 48 is appropriately set such that the coolant can be supplied to the outer peripheral side of the coil end 14a, or further to the inner peripheral side, for example. The skirt portion 48 is formed into a recessed shape as appropriate, so as to facilitate retention and flow of the coolant.

Furthermore, the coolant guide 42 may be formed such that the coolant can communicate with the coolant supply channel 20. For example, as illustrated in FIG. 3B, the coolant guide 42 may be connected to the coolant supply channel 20 or another coolant supply channel via a coolant intake hole 42a of the coolant guide 42 such that the coolant can flow therethrough.

In the present embodiment, the coolant supply channel 20 can supply the coolant toward the holder 40 from a plurality of locations, which is the two locations on the outer peripheral side of the stator core 8, such that the coil end 14a can be cooled with a greater amount of coolant. Note that this is not restrictive and that it is sufficient for the number of the coolant flow channels to be one or more, and may be three or more. The locations thereof are not limited, either. Further, although the coolant supply channels 20 are provided with the discharge ports 20a at distal ends thereof, one or more discharge ports may be provided on side walls of the coolant supply channels 20, depending on the extending form of the coolant supply channels 20 and positional relations thereof with the holder 40. Furthermore, the coolant supply channels 20 may be bent, taking into consideration efficiency of supplying the coolant to the holder 40.

### Second Embodiment

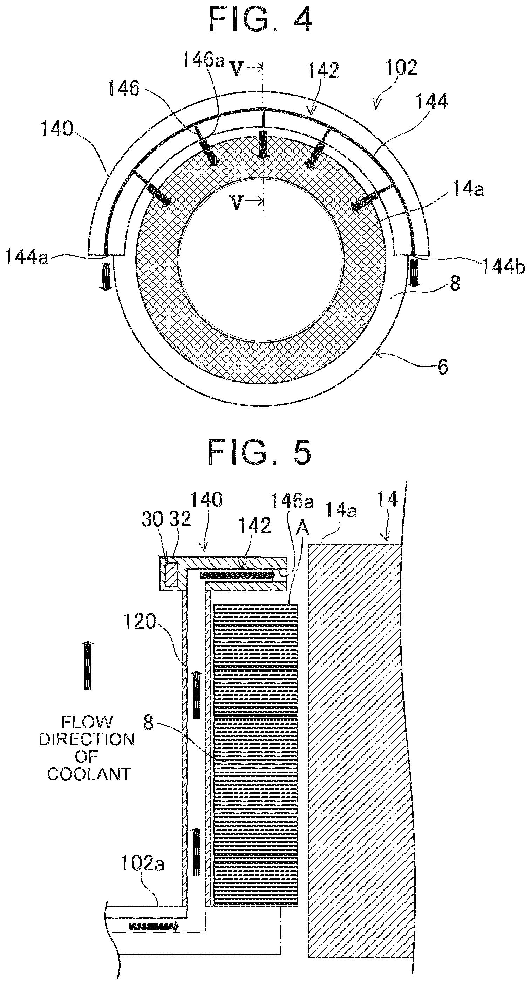

A second embodiment relates to a motor 102 in which a holder 140 has an internal coolant flow channel 142 therein as a coolant flow path, as exemplified in FIGS. 4 and 5. FIG. 4 illustrates a plan view of the stator 6 of the motor 102 according to the second embodiment, viewing the end portion A from above. FIG. 5 illustrates a cross-sectional view taken along line V-V in the plan view of FIG. 4. In the following description, differences as to the first embodiment will be mainly described, and configurations that are in common with the first embodiment are denoted by the same signs and description thereof will be omitted.

The motor 102 according to the present embodiment includes the rotor 4, the stator 6, a coolant supply channel 120, the bus bar 30, and the holder 140. The motor 102 is housed inside a casing 102a.

The coolant supply channel 120 extends in the axial direction at one predetermined position on the outer periphery of the stator core 8. The coolant supply channel 120 is disposed approximately at the middle of the holder 140 in the extending direction. The coolant supply channel 120 is connected to the holder 140 directly below the holder 140. The coolant supply channel 120 has a common configuration with the coolant supply channels 20 according to the first embodiment, except for the number installed and locations of installation thereof, and the point that the coolant supply channel 120 is connected to the holder 140 and does not have a discharge port at the end portion thereof.

The holder 140 has the internal coolant flow channel 142 formed within its own arc-like shape. The holder 140 is connected at a bottom thereof to the coolant supply channel 120, and the coolant supply channel 120 and the internal coolant flow channel 142 are in communication with each other such that the coolant can flow therethrough.

The internal coolant flow channel 142 includes a flow channel 144 that is arc-shaped, following the shape of the holder 140, and a plurality of flow channels 146 branching out toward an inward side in the radial direction, from an inner periphery of this flow channel at predetermined positions thereof. Note that in FIG. 4, the flow channels 144 and 146 are flow channels inside the holder 140, but for the sake of explanation, they are also illustrated in the plan view as well, in a simplified manner. Distal ends of the flow channel that extends in the arc-like shape are open at both distal ends in the extending direction of the holder 140, forming discharge ports 144a and 144b for the coolant. Also, the multiple flow channels 146 open on an inner peripheral face of the holder 140, forming a plurality of coolant discharge ports 146a. These discharge ports 144a, 144b, and 146a are each directed toward the coil end 14a, and are formed to be able to discharge the coolant to the coil end 14a.

The holder 140 has a common configuration with the holder 40 of the first embodiment, except for the location of installation thereof, the point of connection to the coolant supply channel 120, and the point of having the internal coolant flow channel 142 that communicates with the coolant supply channel 120, instead of being provided with the coolant guide 42.

Next, cooling of the coil end 14a in the motor 102 will be described. First, when the coolant flowing through the casing 102a of the motor 102 is supplied to the coolant supply channel 120, the coolant flows toward the end portion A and reaches the internal coolant flow channel 142 of the holder 140. The coolant passes through the internal coolant flow channel 142 and is discharged and supplied from the discharge ports 144a, 144b, and 146a toward the coil end 14a. The holder 140 and the internal coolant flow channel 142 are formed in an arc-like shape along a predetermined range of the outer peripheral edge of the stator core 8, and the coolant is supplied over a corresponding range of the coil end 14a.

Thus, the internal coolant flow channel 142, which the holder 140 has, supplies the coolant to the coil end 14a, thereby performing cooling thereof. Thereby, the coolant is not obstructed by the holder 140, but rather passes through the internal coolant flow channel 142 within the holder 140 and is supplied to the coil end 14a, thereby effectively cooling the coil end 14a. The holder 140 is also cooled.

The present embodiment is configured with the coolant supply channel 120 and the holder 140 being connected to each other, and accordingly the intended amount of coolant can be reliably supplied to the coil end 14a without waste. Therefore, the coil end 14a can be cooled more in accordance with the cooling that is intended.

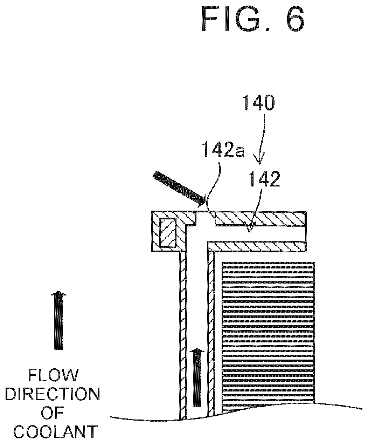

Note that while the coolant supply channel 120 is provided in the present embodiment, this is not restrictive. For example, the coolant is flying within the casing 102a of the motor 102, in the vicinity of the motor 102. For example, as illustrated in FIG. 6, the internal coolant flow channel 142 of the holder 140 is provided with a coolant intake hole 142a that opens to outside of the holder 140 so as to be able to receive such coolant, thereby enabling the coolant to be supplied to the coil 14 and so forth via the internal coolant flow channel 142.

In the present embodiment, the internal coolant flow channel 142 is configured with the flow channel 144 that is arc-shaped, and the flow channels 146 that are branched, but this is not restrictive. The internal coolant flow channel 142 communicates with the coolant supply channel 120, but is not particularly limited thereto as long as it opens at the inner periphery of the holder 140 and/or at end portions of the holder 140 that extends in an arc-like shape. For example, the coolant supply channel 120 may have a plurality of paths and a plurality of openings that branch out toward the inward side in the radial direction and/or toward the peripheral direction in an arc-like manner, directly from a portion of communication with the coolant supply channel 120 and the vicinity thereof, or the coolant supply channel 120 may have a single path and a single opening that branch out toward the inward side in the radial direction and/or toward the peripheral direction in an arc-like manner, directly from the portion of communication.

The layout and forms of the coolant supply channel 120 and the holder 140 in the present embodiment can take on various forms, similar to those in the first embodiment. Also, the holder 140 may be provided with skirt portions having various forms, extending from the discharge ports 144a, 144b, and 146a of the internal coolant flow channel 142, similar to the first embodiment.

### Third Embodiment

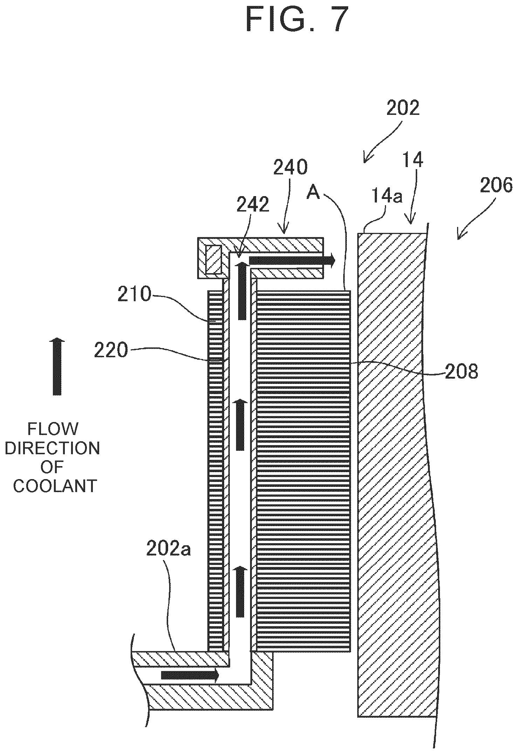

A third embodiment relates to a motor 202 in which a holder 240 is in communication with a coolant supply channel 220 that passes through inside of a stator core 208, as exemplified in FIG. 7. FIG. 7 illustrates a cross-sectional view in the axial direction of a stator 206 of the motor 202 according to the third embodiment. In the following description, differences as to the first embodiment will be mainly described, and configurations that are in common with the first embodiment are denoted by the same signs and description thereof will be omitted.

The motor 202 according to the present embodiment includes the rotor 4, the stator 206, the coolant supply channel 220, a bus bar 230, and the holder 240. The motor 202 is housed inside a casing 202a.

The stator 206 has the coolant supply channel 220. The coolant supply channel 220 passes through the inside of the stator core 208 in the axial direction. For example, the coolant supply channel 220 is formed such that the coolant is supplied from the casing 202a and flows toward the end portion A. The coolant supply channel 220 is formed in, for example, a back yoke 210 of the stator core 208, though this is not restrictive. A plurality of the coolant supply channel 220 is provided along the peripheral direction of the stator core 208, and the coolant supply channels 220 formed in the range in which the holder 240 is disposed are connected to an internal coolant flow channel 242, which is a coolant flow path of the holder 240.

The holder 240 holds the bus bar 230, and is disposed at the end portion A or in close proximity to the end portion A of the stator core 208. The holder 240 has an internal coolant flow channel 242 within as a coolant flow path. The holder 240 is integrated with the coolant supply channels 220 on a face facing the end portion A, and the coolant supply channels 220 and the internal coolant flow channel 242 are in communication with each other such that the coolant can flow therethrough.

Although omitted from illustration, the internal coolant flow channel 242, similar to the second embodiment, has an arc-shaped flow channel that follows the form of the holder 240, and multiple flow paths that branch out toward the inward side in the radial direction, from an inner periphery at a predetermined position of this flow path, and has a similar discharge port.

Except for the above-described configuration, the holder 240 has a configuration that is in common with the holder 40 of the first embodiment.

Next, cooling of the coil end 14a in the motor 202 will be described. First, when the coolant flowing through the casing 202a of the motor 202 is supplied to the coolant supply channel 220, the coolant passing through the coolant supply channel 220 flows toward the end portion A and reaches the internal coolant flow channel 242 of the holder 240. The coolant passes through the internal coolant flow channel 242 and is discharged from the discharge port toward the coil end 14a and supplied thereto. The holder 240 and the internal coolant flow channel 242 are formed in an arc-like shape along a predetermined range of an outer peripheral edge of the stator core 208, and the coolant is supplied over a corresponding range of the coil end 14a.

Thus, the internal coolant flow channel 242, which the holder 240 has, supplies the coolant to the coil end 14a, thereby performing cooling thereof. In this way, the coolant is supplied to the coil end 14a without being obstructed by the holder 240, and accordingly the coil end 14a is effectively cooled. Also, the stator core 208 and the holder 240 are cooled as well.

The present embodiment is configured with the coolant supply channel 220 and the holder 240 being connected to each other, similar as with the second embodiment, which enables the intended amount of coolant to be reliably supplied to the coil end 14a without waste, and also the coil end 14a may be able to be cooled more in accordance with the cooling that is intended. Further, in the present embodiment, the coolant supply channel 220 passes through the inside of the stator core 208 and is not disposed on an outer periphery of the stator core 208, and accordingly that the cooling structure can be made to be compact.

In the present embodiment, the internal coolant flow channel 242 is configured with the arc-shaped flow path and the branched flow path, but this is not restrictive. The present embodiment can take on various forms, similar to those in the second embodiment.

The layout and form of the holder 240 in the present embodiment can take on various forms, similar to those in the first embodiment. Also, the holder 240 may be provided with various types of skirt portions as appropriate, depending on the positional relation with the coil end 14a, similar to in the first embodiment.

The first to third embodiments have been described above, and these embodiments can be combined as appropriate. For example, the holder 40, 140, or 240 can include an appropriate combination of the coolant flow path 42, 142, or 242 and the coolant supply channel 20, 120, or 220.

Although the specific examples of the technology disclosed in the present specification have been described in detail above, these are merely exemplary and do not limit the scope of claims. The technology described in the claims includes various modifications and alterations of the specific example exemplified above. The technical elements described in the present specification or illustrated in the drawings exhibit technical utility solely or in various combinations, and are not limited to the combinations described in the claims at the time of filing. The technology illustrated in the present specification or the drawings can achieve a plurality of objects at the same time, and has technical utility in itself by achieving one of the objects.

## Claims

1. A motor (2; 102; 202) comprising:
a stator core (8);
a coil (14) that is wound around the stator core (8);
a neutral bus bar (30) that is connected to the coil (14); and
a bus bar holder (40; 140; 240) that holds the neutral bus bar (30), wherein the bus bar holder (40; 140; 240) includes a coolant flow path capable of receiving coolant from the motor (2; 102; 202) and also supplying the coolant toward a coil end (14a) exposed from the stator core (8).

2. The motor (2) according to claim 1, wherein the coolant flow path includes a coolant guide (42) that is open and that guides the coolant toward the coil end (14a).

3. The motor (102; 202) according to claim 1, wherein the coolant flow path includes an internal coolant flow channel (142; 242) that passes through the bus bar holder (140; 240) and also includes an opening that discharges the coolant toward the coil end (14a).

4. The motor (2; 102; 202) according to claim 1, further comprising a coolant supply channel (20; 120; 220) configured to supply the coolant to the coolant flow path.

5. The motor (2) according to claim 4, wherein:
the coolant flow path includes a coolant guide (42) that is open and that guides the coolant toward the coil end (14a); and
the coolant supply channel (20) is configured to communicate with the coolant guide (42) such that the coolant flows through the coolant guide (42), or to discharge the coolant into the coolant guide (42).

6. The motor (2) according to claim 5, wherein:
the coolant supply channel (20) is disposed spaced apart from the bus bar holder (40); and
the coolant guide (42) is configured to receive the coolant discharged from the coolant supply channel (20).

7. The motor (2) according to claim 4, wherein:
the coolant flow path includes an internal coolant flow channel (42) that passes through the bus bar holder (40) and that also includes an opening that discharges the coolant toward the coil end (14a); and
the coolant supply channel (20) communicates with the internal coolant flow channel (42) such that the coolant can flow through the internal coolant flow channel (42), or discharges the coolant into a coolant intake hole of the internal coolant flow channel (42).

8. The motor (2) according to claim 1, wherein the bus bar holder (40) includes a skirt portion (48) extending toward the coil end (14a) to supply the coolant that passed through the coolant flow path to the coil end (14a).

9. The motor (2) according to claim 1, wherein the bus bar holder (40) is configured to supply the coolant to the coil end (14a) over a range of at least a quarter of a circumference of the stator core (8).

10. The motor (2) according to any one of claims 4 to 7, wherein the coolant supply channel (20) is disposed on an outer periphery of the stator core (8).

11. The motor according to any one of claims 4 to 7, wherein the coolant supply channel passes through inside of the stator core.
